Europäisches Patentamt

European Patent Office

Office européen des brevets

(19)

(11) **EP 1 594 131 A2**

(12) **EUROPEAN PATENT APPLICATION**

(43) Date of publication:
**09.11.2005 Bulletin 2005/45**

(51) Int Cl.7: **G11B 20/10**, G11B 20/12,
G11B 27/30

(21) Application number: **05007193.5**

(22) Date of filing: **01.04.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **07.05.2004 JP 2004138065**

(71) Applicant: **MATSUSHITA ELECTRIC INDUSTRIAL
CO., LTD.**
**Kadoma-shi, Osaka 571-8501 (JP)**

(72) Inventors:
• **Urata, Shingo**
  **Takatsuki-shi Osaka 569-0081 (JP)**
• **Nishio, Kosuke**
  **Kadoma-shi Osaka 571-0057 (JP)**

(74) Representative: **Grünecker, Kinkeldey,
Stockmair & Schwanhäusser Anwaltssozietät
Maximilianstrasse 58
80538 München (DE)**

(54) **Reproduction apparatus and reproduction method**

(57)     An input signal is received by a signal input section. Each of a plurality of sync signal detection sections detects a predetermined sync signal and information indicating a frame size from the input signal, and determines the type of the input signal based on whether or not the sync signal is present following the frame size, whereby a plurality of determination results are output from the sync signal detection sections. A determination section obtains a correct determination result based on the plurality of determination results to determine the type of the input signal, and a signal processing section processes the input signal according to the type of the input signal.

FIG.1

EP 1 594 131 A2

## Description

### CROSS REFERENCE TO RELATED APPLICATION

This application claims priority under 35 U.S. C. §119 on Patent Application No. 2004-138065 filed in Japan on May 7, 2004, the entire contents of which are hereby incorporated by reference.

### BACKGROUND OF THE INVENTION

The present invention relates to a reproduction apparatus and a reproduction method for reproducing a digital audio signal and an encoded stream signal.

Conventionally, a recording medium such as a CD (Compact Disk) carries a digital audio signal recorded thereon according to a 2-ch 16-bit PCM (Pulse Code Modulation) scheme. A digital audio signal recorded according to such a recording scheme will hereinafter be referred to as a PCM digital audio signal.

More recently, there are techniques for recording a digital audio signal that is encoded according to a predetermined encoding scheme on a recording medium such as a CD or a DVD (Digital Versatile Disk) or on a DTV (Digital TV) radio wave. An example of such an encoding scheme know in the art is DTS (Digital Theater System). A digital audio signal encoded according to DTS will hereinafter be referred to as a DTS stream signal.

Moreover, systems such as a DVD system for reproducing data from a medium on which video data and audio data are compressed have been rapidly increasing. With such a system, video and audio input data are divided into packets, which are multiplexed together. Video data (or a video signal) and audio data (or an audio signal) are separated from such input data and are decoded to reproduce a video image and audio sound.

DTS is used as one audio standard for DVDs. There are various other standards, including AC-3, MPEG-AUDIO and LPCM (Linear PCM).

DTS is a standard made by DTS (Digital Theater Systems Inc.) of the United States, according to which a multi-channel (up to 5.1 ch) signal is encoded at a fixed rate of 1.411 Mbps (which is the bit rate of 2-ch PCM data for CDs), and the encoded signal is recorded on a CD. Moreover, with DTS, a multi-channel (up to 5.1 ch) signal is encoded at a bit rate of 192 kbps to 1.536 Mbps, and the encoded signal is recorded on a DVD.

Where a PCM digital audio signal is recorded on a CD, the recorded digital audio signal can be reproduced by D/A-converting the PCM digital audio signal. Where an encoded digital audio signal is recorded on a CD or a DVD, the encoded digital audio signal cannot be reproduced unless the encoded digital audio signal is decoded before it is D/A-converted.

In view of the problem, Japanese Laid-Open Patent Publication No. 2002-190156, for example, discloses detecting a predetermined sync signal and information indicating a frame size from an encoded digital audio signal and examining whether or not a sync signal is present following the predetermined frame size, thereby determining whether the input signal is a PCM digital audio signal or an encoded digital audio signal and properly processing the input signal according to the type of the input signal.

The frame size may be obtained in the form of a parameter set in the information indicating the frame or by calculation based on the bit rate and the sampling frequency in the header section.

### SUMMARY OF THE INVENTION

With the conventional technique, however, if parameters such as the frame size and the number of samples of the input signal cause a syntax error, an incorrect frame size for the input signal is output, whereby an erroneous sync signal detection result will be output. Then, a digital audio signal that has been encoded at a variable rate may be erroneously determined to be a PCM digital audio signal and thus D/A-converted without being decoded, in which case the reproduction apparatus may output noise.

It is therefore an object of the present invention to make it possible to accurately determine the type of an input signal and thereby to reduce noise even if the input stream contains values incompliant with the standards.

Specifically, a reproduction apparatus of the present invention includes: a signal input section for receiving an input signal; a plurality of sync signal detection sections each for detecting a predetermined sync signal and information indicating a frame size from the input signal, and determining a type of the input signal based on whether or not the sync signal is present following the frame size; a determination section for obtaining a correct determination result based on a plurality of determination results from the sync signal detection sections to determine the type of the input signal; and a signal processing section for processing the input signal according to the type of the input signal.

In one embodiment of the present invention, the reproduction apparatus further includes a setting section for specifying a detection method to be selected from among a plurality of sync signal detection methods for detecting the sync signal, and for specifying a determination condition in the determination section so as to obtain a correct determination result based on the plurality of determination results.

In one embodiment of the present invention, the reproduction apparatus further includes a signal source determination section for determining a type of the input signal by determining a type of a recording medium from which the input signal is supplied to the signal input section.

In one embodiment of the present invention, the reproduction apparatus further includes a signal source determination section for determining a type of the input signal by determining a type of a transmission method by which the input signal is supplied to the signal input section.

In one embodiment of the present invention, the reproduction apparatus further includes a system section for controlling a setting operation performed by the setting section from outside the setting section.

A reproduction method of the present invention includes the steps of: receiving an input signal; detecting a predetermined sync signal and information indicating a frame size from the input signal, and determining a type of the input signal based on whether or not the sync signal is present following the frame size; obtaining a correct determination result based on a plurality of determination results to determine the type of the input signal; and processing the input signal according to the type of the input signal.

In one embodiment of the present invention, a setting section is used to specify a detection method to be selected from among a plurality of sync signal detection methods for detecting the sync signal, and to specify a determination condition so as to obtain a correct determination result based on the plurality of determination results.

In one embodiment of the present invention, the reproduction method further includes a step of determining a type of a recording medium from which the input signal is supplied.

In one embodiment of the present invention, the reproduction method further includes a step of determining a type of a transmission method by which the input signal is supplied.

In one embodiment of the present invention, the reproduction method further includes a step of controlling a setting operation performed by the setting section from outside the setting section.

The reproduction apparatus and the reproduction method of the present invention obtain a correct determination result based on a plurality of determination results from a plurality of sync signal detection sections to determine the type of the input signal. Therefore, even if parameters of the input signal cause a syntax error, it is possible to make a determination comprehensively, thereby improving the error tolerance and preventing noise from being output.

Furthermore, the type of the input signal is determined based on the type of the recording medium being reproduced or the transmission method by which the input signal is supplied, whereby it is possible to more reliably prevent noise from being output.

Moreover, the processing functions in the setting section can be restricted to simplify the overall process, thereby improving the processing speed. The function or functions to be restricted can be specified from the system section, whereby it is possible to easily make a change in the function or functions to be restricted.

## BRIEF DESCRIPTION OF THE DRAWINGS

FIG. **1** shows a configuration of a reproduction apparatus according to Embodiment 1 of the present invention.

FIG. **2A** and FIG. **2B** show the format of a DTS stream signal and that of a PCM signal, respectively.

FIG. **3** is a flow chart showing an exemplary operation of a determination section.

FIG. **4** shows a configuration of a reproduction apparatus according to Embodiment 2 of the present invention.

FIG. **5** is a flow chart showing an exemplary operation of a setting section.

FIG. **6** shows a configuration of a reproduction apparatus according to Embodiment 3 of the present invention.

FIG. **7** is a flow chart showing an exemplary operation of a setting section, in connection with the reproduction apparatus of Embodiment 3.

FIG. **8** shows a configuration of a reproduction apparatus according to Embodiment 4 of the present invention.

## DETAILED DESCRIPTION OF THE INVENTION

Preferred embodiments of the present invention will now be described in detail with reference to the drawings. The preferred embodiments set forth below are merely illustrative of the present invention and are in no way intended to restrict the scope or the applications of the invention.

EMBODIMENT 1

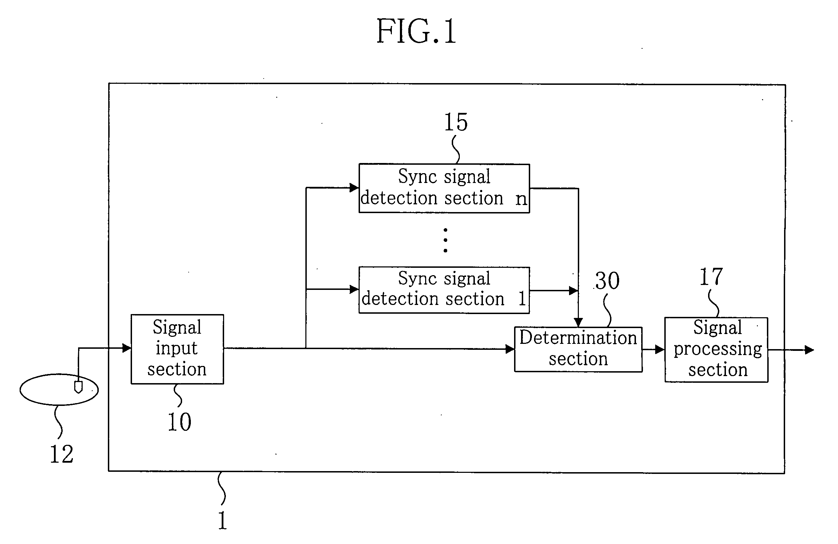

FIG. **1** shows a configuration of a reproduction apparatus **1** according to Embodiment 1 of the present invention. Referring to FIG. **1,** a signal is read out from a recording medium **12** such as a CD or a DVD, and is passed to a signal input section **10** as an input signal.

While it is assumed in Embodiment 1 that the input signal to the reproduction apparatus **1** is either a DTS stream signal **100** or a PCM signal **200,** the type of the input signal is not limited thereto. For example, the input signal may be any type of an input signal, the type of which can be determined based on whether or not the first one of a series of sync signals is present within a predetermined search range of the input signal.

The input signal is then passed from the signal input section **10** to each of a plurality of sync signal detection sections **15.**

In each of the sync signal detection sections **15,** it is determined whether or not a sync signal is present within a predetermined search range of the input signal, and if it is present within the search range, the position of the next sync signal is calculated based on the frame size. Then, it is determined whether or not the next sync signal is present at the calculated position thereof. A specific method for determining the type of the input signal will now be described.

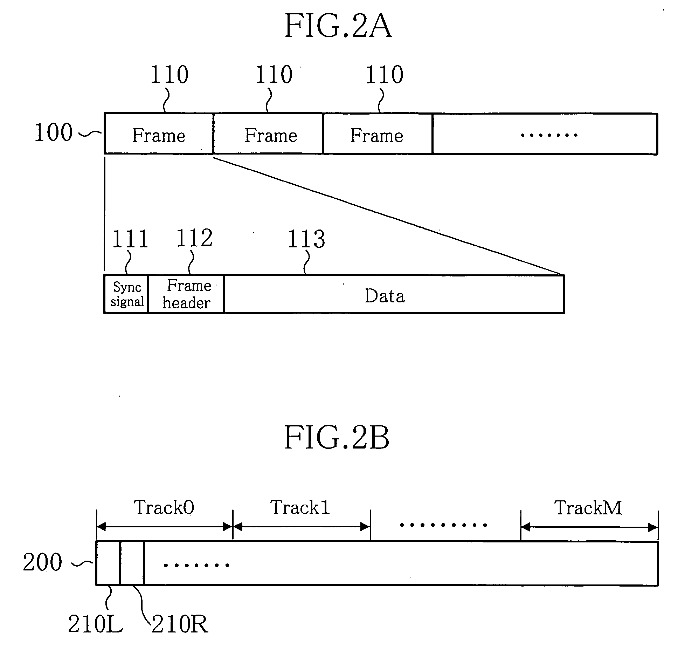

FIG. **2A** shows a format of the DTS stream signal **100**. The DTS stream signal **100** includes a plurality of frames **110**. Each frame **110** includes a sync signal **111,** a frame header **112** and data **113**.

FIG. **2B** shows a format of the PCM signal **200**. The PCM signal **200** is recorded along a plurality of tracks provided on the recording medium **12** (e.g., Track 0, Track 1, ..., Track M). Herein, M is an integer.

The PCM signal **200** includes left-channel signals **210L** and right-channel signals **210R** alternating with each other.

It is assumed herein that the number of samples per frame is Sa [samples]. The number of samples Sa per frame differs between different types of stream signals.

The length FL of a frame of data can be calculated as shown in Expression **1** below:

$$FL=(Sa/FS)\times BR \qquad \text{Expression 1}$$

where FS [kHz] is the sampling frequency, and BR [bytes] is the bit rate.

Based on the frame size calculated as shown in Expression 1, the position of the next sync signal is calculated. If the sync signal detection section **15** fails to detect the next sync signal at the calculated position thereof, the predetermined search range is updated, and it is determined whether or not the sync signal **111** is present within the updated search range.

Where the frame size is fixed, the sync signal **111** may be detected based on the intervals at which the sync signals **111** appear.

Then, a detection signal indicating the type of the input signal as determined in each of the sync signal detection sections **15** is output to a determination section **30**. For example, if the input signal is a DTS stream signal, detection signals having a value of "1" are output to the determination section **30,** and if the input signal is a PCM signal, detection signals having a value of "0" are output to the determination section **30.**

However, as described above, the detection signals from the sync signal detection sections **15** may not all indicate the same result. This is because an erroneous signal detection result may be output for a stream incompliant with the standards.

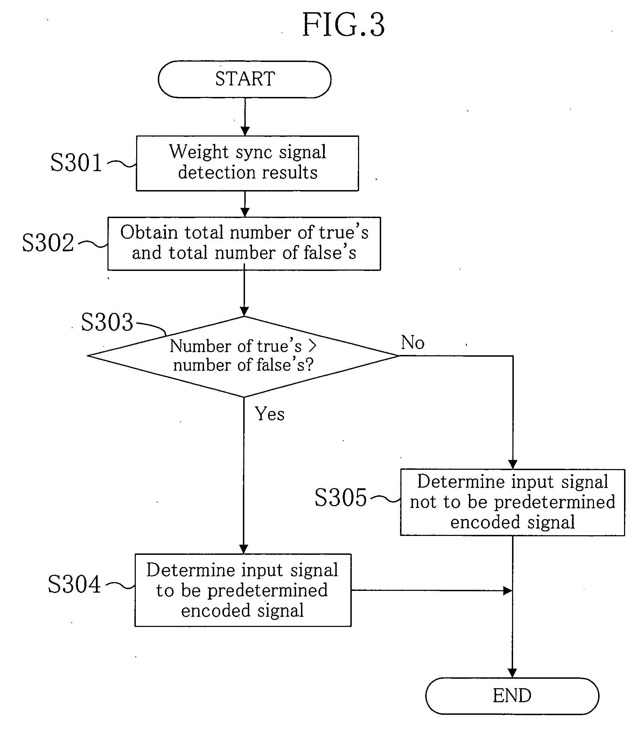

FIG. **3** is a flow chart showing an exemplary operation of the determination section **30.** Referring to FIG. **3,** the determination results from the sync signal detection sections **15** are weighted in step S301. In order to simplify the process, it is preferred that the determination results are equally weighted, whereby the type of the input signal is determined by majority rule.

Then, in step S302, the total number of values "1" (true) and the total number of values "0" (false) are calculated.

In step S303, the total numbers are compared with each other to determine whether or not the total number of values "1" is greater than the total number of values "0".

If "YES" in step S303, the process proceeds to step S304, where the input signal is determined to be a predetermined encoded stream signal.

If "NO" in step S303, the process proceeds to step S305, where the input signal is determined to be a PCM digital audio signal as it is not a predetermined encoded signal.

After the type of the input signal is determined by the determination section **30,** a signal processing section **17** processes the input signal according to the type of the input signal.

If the input signal is a PCM signal, the input signal is output to a D/A conversion section (not shown). If the input signal is a DTS stream signal, the input signal is prevented from being output to the D/A conversion section (not shown). Specifically, this may be achieved by, for example, attenuating the signal level of the input signal to "0", or by altering the transmission path of the input signal so that the input signal is not output to the D/A conversion section (not shown).

EMBODIMENT 2

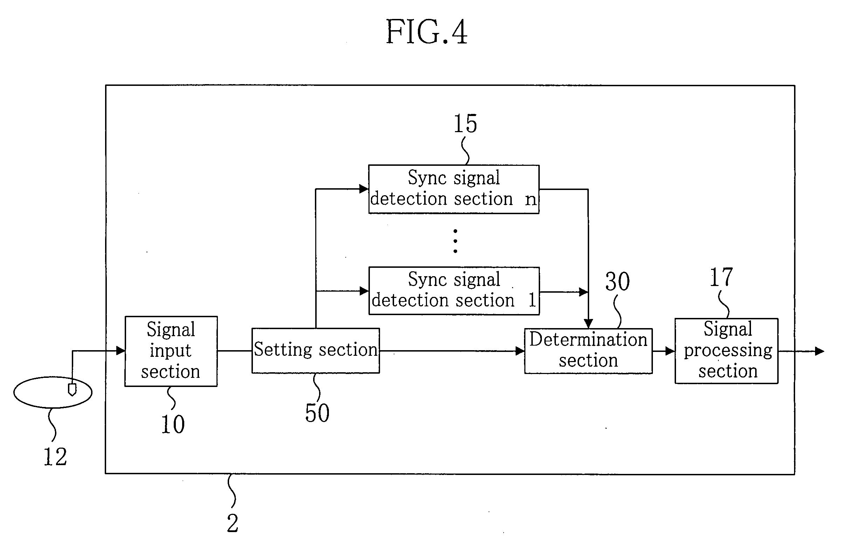

FIG. **4** shows a configuration of a reproduction apparatus **2** according to Embodiment 2 of the present invention. Referring to FIG. **4,** the reproduction apparatus **2** includes a setting section **50,** in addition to the components of the reproduction apparatus **1** of Embodiment 1.

The setting section **50** specifies a detection method to be selected from among a plurality of sync signal detection methods for detecting the sync signal, and also specifies a determination condition in the determination section **30** so as to obtain a correct determination result based on the plurality of determination results.

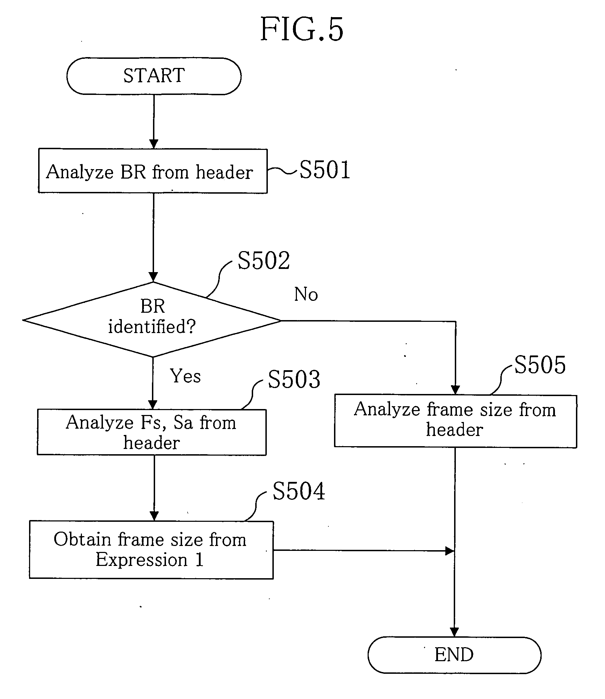

FIG. **5** is a flow chart showing an exemplary operation of the setting section. Referring to FIG. **5,** in step S501, the bit rate BR is analyzed based on the header information of the input stream. In step S502, it is determined whether or not the bit rate BR has been identified.

If "YES" in step S502, the process proceeds to step S503, where the sampling frequency FS and the number of samples Sa per frame are calculated from the header information. In step S504, the frame size is calculated based on Expression 1 shown in Embodiment 1.

If "NO" in step S502, the process proceeds to step S505, where the frame size is analyzed based on the header information of the input signal.

The sync signal is detected based on the frame size obtained in step S504 or S505, and the determination result on the type of the input signal is output. Then, based on the determination results from the sync signal detection sections **15,** the determination section **30** obtains a correct determination result, whereby the type of the input signal is determined. What operation should be performed by the determination section **30** varies depending on the type of the stream.

EMBODIMENT 3

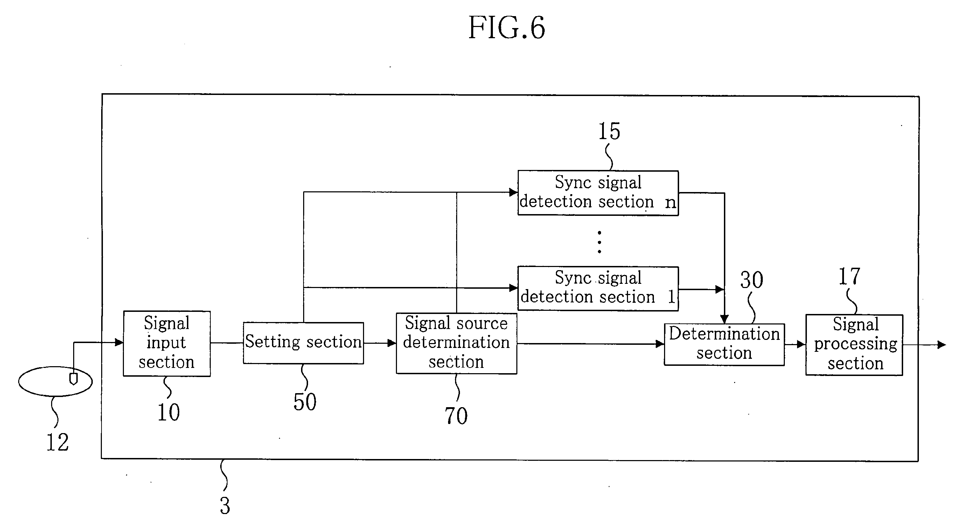

FIG. **6** shows a configuration of a reproduction apparatus **3** according to Embodiment 3 of the present invention. Referring to FIG. **6,** the reproduction apparatus **3** further includes a signal source determination section **70,** in addition to the components of the reproduction apparatus **2** of Embodiment 2.

The signal source determination section **70** determines the type of an input signal by determining the recording medium from which the input signal is supplied or by determining the transmission method by which the input signal is supplied. Moreover, the setting section **50** can specify how the determination result from the signal source determination section **70** is used.

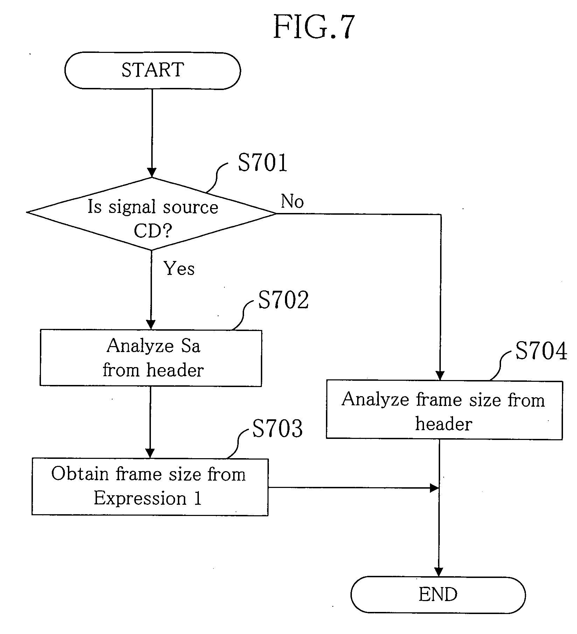

FIG. **7** is a flow chart showing an exemplary process of setting a frame size for detecting a sync signal. Referring to FIG. **7,** in step S701, it is determined whether or not the recording medium from which the input signal is supplied is a CD.

If "YES" in step S701, the process proceeds to step S702, where the number of samples Sa is analyzed based on the header information of the input signal, and the process then proceeds to step S703.

In step S703, the frame size FL is calculated based on Expression 1 shown in Embodiment 1 with a bit rate BR of 1.411 Mbps, a sampling frequency of 44.1 kHz and the number of samples Sa obtained in step S702.

If "NO" in step S701, the process proceeds to step S704, where the frame size is analyzed based on the header information of the input signal. The bit rate of a stream being an input signal is 1.411 Mbps when the recording medium is a CD, whereas it is not fixed when the recording medium is a DVD.

The sync signal is detected based on the frame size obtained in step S703 or S704, and the determination result on the type of the input signal is output. Then, based on the determination results from the sync signal detection sections **15,** the determination section **30** obtains a correct determination result, whereby the type of the input signal is determined. What operation should be performed by the determination section **30** varies depending on the type of the stream.

EMBODIMENT 4

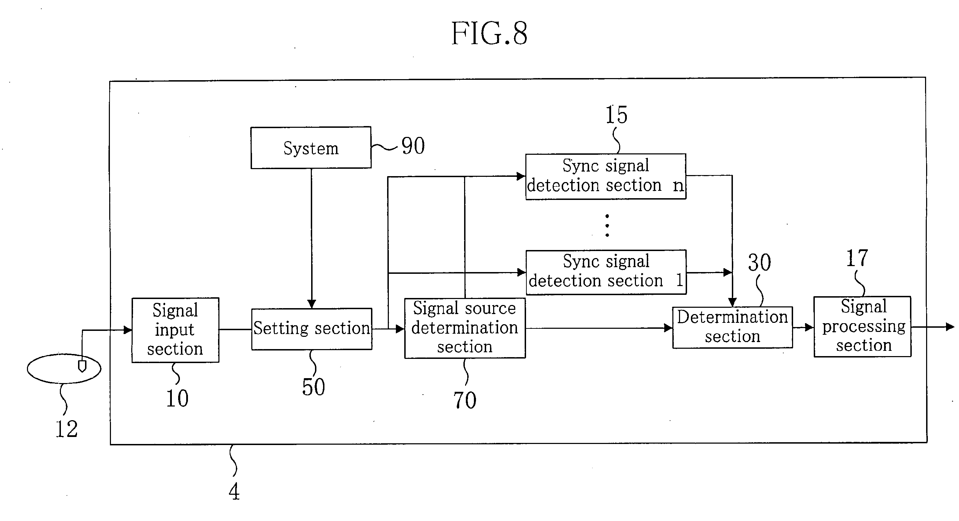

FIG. **8** shows a configuration of a reproduction apparatus **4** according to Embodiment 4 of the present invention. Referring to FIG. **8,** the reproduction apparatus **4** further includes a system section **90** for controlling the overall process, in addition to the components of the reproduction apparatus **3** of Embodiment 3.

The system section **90** externally changes the setting operation performed by the setting section **50.** For example, in view of the type of the stream or the reproduction environment, the system section **90** can specify how the header information used in the sync signal detection sections **15** should be weighted or screened.

The system section **90** can also change the determination method used in the determination section **30.** In view of the type of the stream or the reproduction environment, the system section **90** can specify whether the determination results from the sync signal detection sections **15** should be weighted or just screened.

Thus, the system section **90** can function in view of the type of the stream or the reproduction environment, whereby it is possible to improve the error tolerance. Moreover, the functions to be used can be restricted (e.g., by disabling the signal source determination section **70)** to improve the processing speed. Furthermore, the setting operation can be controlled from the system section **90,** thus improving the customizability.

Thus, the present invention has a high industrial applicability as it provides a highly practical advantage of making it possible to accurately determine the type of the input signal even if the stream contains values incompliant with the standards.

**Claims**

1. A reproduction apparatus, comprising:

   a signal input section for receiving an input signal;
   a plurality of sync signal detection sections each for detecting a predetermined sync signal and information indicating a frame size from the input signal, and determining a type of the input signal based on whether or not the sync signal is present following the frame size;
   a determination section for obtaining a correct determination result based on a plurality of determination results from the sync signal detection sections to determine the type of the input signal; and
   a signal processing section for processing the input signal according to the type of the input signal.

2. The reproduction apparatus of claim 1, further comprising a setting section for specifying a detection method to be selected from among a plurality of sync signal detection methods for detecting the sync signal, and for specifying a determination condition in the determination section so as to obtain a correct determination result based on the plurality of determination results.

3. The reproduction apparatus of claim 2, further comprising a signal source determination section for determining a type of the input signal by determining a type of a recording medium from which the input signal is supplied to the signal input section.

4. The reproduction apparatus of claim 2, further comprising a signal source determination section for determining a type of the input signal by determining a type of a transmission method by which the input signal is supplied to the signal input section.

5. The reproduction apparatus of claim 3, further comprising a system section for controlling a setting operation performed by the setting section from outside the setting section.

6. A reproduction method, comprising the steps of:

receiving an input signal;
detecting a predetermined sync signal and information indicating a frame size from the input signal, and determining a type of the input signal based on whether or not the sync signal is present following the frame size;
obtaining a correct determination result based on a plurality of determination results to determine the type of the input signal; and
processing the input signal according to the type of the input signal.

7. The reproduction method of claim 6, wherein a setting section is used to specify a detection method to be selected from among a plurality of sync signal detection methods for detecting the sync signal, and to specify a determination condition so as to obtain a correct determination result based on the plurality of determination results.

8. The reproduction method of claim 7, further comprising a step of determining a type of a recording medium from which the input signal is supplied.

9. The reproduction method of claim 7, further comprising a step of determining a type of a transmission method by which the input signal is supplied.

10. The reproduction method of claim 8, further comprising a step of controlling a setting operation performed by the setting section from outside the setting section.

FIG.1

# FIG.2A

# FIG.2B

# FIG.3

```
        ┌──────────────┐
        │    START     │
        └──────────────┘
               │
               ▼
       ┌────────────────────┐
S301 ~ │  Weight sync signal │
       │  detection results  │
       └────────────────────┘
               │
               ▼
       ┌──────────────────────────┐
S302 ~ │ Obtain total number of   │
       │ true's and total number  │
       │ of false's               │
       └──────────────────────────┘
               │
               ▼
S303 ~       ◇ Number of true's >        No
             ◇ number of false's?  ─────────┐
               │ Yes                        │
               ▼                            ▼
                              ┌──────────────────────────┐
                       S305 ~ │ Determine input signal    │
                              │ not to be predetermined   │
                              │ encoded signal            │
                              └──────────────────────────┘
       ┌────────────────────┐            │
S304 ~ │ Determine input    │            │
       │ signal to be       │───────────►│
       │ predetermined      │            │
       │ encoded signal     │            │
       └────────────────────┘            │
                                          ▼
                                ┌──────────────┐
                                │     END      │
                                └──────────────┘
```

# FIG.4

EP 1 594 131 A2

# FIG.5

START

Analyze BR from header —S501

S502

BR
identified? No

Yes S503

Analyze Fs, Sa from
header

Analyze frame size from
header —S505

S504

Obtain frame size from
Expression 1

END

# FIG.6

FIG.7

START

S701

Is signal source
CD?          No

Yes

S702

Analyze Sa
from header

S704

Analyze frame size from
header

S703

Obtain frame size from
Expression 1

END

FIG.8

EP 1 594 131 A2